# EUROPEAN PATENT APPLICATION

(11) **EP 1 544 556 A1**
(43) Date of publication of application: **22.06.2005**
(21) Application number: 04029678.2
(22) Date of filing: 15.12.2004
(51) Int. Cl.: F25B 49/02, B60H 1/32, B60H 3/00, F24F 11/00

(54) **Air conditioning system**

(30) Priority: 16.12.2003 JP 2003417445
(71) Applicant: Valeo Climatisation, 78321 Le Mesnil St Denis Cedex (FR)
(72) Inventor: Lijima, Kenji, Konan - Machi Saitama 360 0193 (JP)

(57) **Abstract**

Using a simple device, the evaporator surface is kept in a state of dampness by way of condensed water, offering an air-conditioning system that is able to suppress the occurrence of bad smells. In addition, in being able to influence the state of operation of the compressor to avoid the point where bad smells are produced, power used by the compressor can be controlled.

The means for solving the problem incorporates a temperature detection device which detects the temperature of the evaporator's refrigeration cycle and a device which determines whether or not the temperature of the evaporator has stabilized when the operation of the refrigeration cycle is stopped, and when it has been determined that the evaporator temperature has been stabilized can recognize any temperature below that of the stabilized temperature as the control temperature and using the control temperature as a basis, controls a compressor. If the compressor is a fixed capacity type, the control temperature is used as the threshold level which switches the compressor on and off, and if the compressor is a variable capacity type, the control temperature is used as a basis, in order to allow the temperature of the evaporator to fluctuate, causing the discharge volume of the above-mentioned compressor to vary.

## Description

The present invention relates an air-conditioning system capable of being used in vehicles and capable of power saving control for the compressor while preventing bad odors generated by a evaporator housed in a ventilation case.

To control air-conditioner power usage, a variable thermostat compressor or variable capacity type compressor is used, and cooling efficiency is effectively decreased by raising the evaporator evaporating temperature, but by carrying out this type of control the condensed water adhering to the evaporator surface evaporates, and bad smells are known to occur when the evaporator dries out.

To prevent such a situation, there is a need to control the evaporator by way of a temperature limit at which the condensed water does not evaporate, but conventionally, as shown in Japanese patent application number 2002-224026 , by establishing both a temperature sensor which detects the evaporator intake air temperature and a humidity sensor which detects the evaporator intake air temperature, using these two sensors the detected air temperature and the wet-bulb temperature using the air temperature as a basis are calculated, and in addition the dew-point temperature of the evaporator intake air are calculated from the evaporator intake air temperature as shown in the moist air diagram and the percentage humidity, and in the event that the conditions are fulfilled for bad smells to be emitted from the evaporator, the desired temperature for the evaporator is set at a level lower than the evaporator intake air's wet-bulb temperature, and moreover, a temperature is set which is higher than the evaporator intake air dew-point temperature, and before the condensed water dries out the evaporator's temperature is reduced such that the evaporator surface is maintained in a wet state by way of the and as a result the occurrence of bad smells is suppressed. There is common awareness of such constructions.

However, under the current circumstances there are hardly any temperature sensors which are excellent as far as reliability and endurance are concerned, and which are suitable for use in automobiles, and in addition, because in establishing the humidity sensors themselves the number of sensors has increased, there are inconvenience/disadvantage associated with the increase in the number of components and the complexity of construction.

Consequently, the present invention fulfils the principal task of providing an air-conditioning system which, by using a simple method whereby the evaporator surface is kept in a state of wetness by way of condensed water, the occurrence of bad smells is able to be suppressed. In addition, it fulfils the task of controlling the active state of the compressor just prior to the occurrence of bad smells, by planning the to save power used by the air-conditioner.

In order to fulfil the above-mentioned task, the air-conditioning system concerned in the present invention is an air-conditioning system which is characterized by a ventilation case formed with air ducts and a blower fan which regulates the quantity of air channelled from the above-mentioned ventilation case to the space being ventilated and a compressor which condenses refrigerant, or a refrigeration cycle in the above-mentioned ventilation case which has an evaporator which cools air confined and passing through and a temperature detection means which detects the temperature of the above-mentioned evaporator and a temperature determination means which determines whether or not the temperature of the above-mentioned evaporator is stable when the operation of the above-mentioned refrigeration cycle is stopped and a control temperature determination means which, once the above-mentioned temperature determination means has determined that the temperature of the above-mentioned evaporator has stabilized, can recognize any temperature below that of the stabilized temperature as the control temperature and a control means which, using the above-mentioned control temperature as a basis, controls the above-mentioned compressor.

Usually, the evaporator temperature gradually rises from the time that the compressor stops or when the operation of the refrigeration cycle, which has been set to full minimum is stopped until the condensed water starts to evaporate, and when the condensed water starts to evaporate the temperature remains constant, and then when the condensed water has evaporated it again starts to rise. Because it is has been identified that bad smells are emitted from the evaporator more intensely at the point in time when the condensed water has evaporated, by detecting when the condensed water is evaporating and the evaporator temperature has stabilized, and by using as the control temperature any temperature lower than the evaporator temperature at this point in time, it becomes possible to prevent the evaporator from drying out and thereby also to suppress the occurrence of bad smells.

Consequently, by employing the construction described above, because the temperature detection means is used to determine any change in the evaporator temperature after the stop in operation of the refrigeration cycle, it becomes possible to suppress the occurrence of bad smells from the evaporator simply by using the temperature detection means.

Here, the compressor may either be a fixed capacity type, whereby the control means shall, using the control temperature as the threshold level which activates the above-mentioned compressor machine, control the on and off function of the above-mentioned compressor or the compressor may be a variable capacity type, whereby the control means shall, using the control temperature as a basis, in order to allow the temperature of the evaporator to fluctuate, cause the discharge volume of the above-mentioned compressor to vary.

In addition, it may be equipped with an inlet air temperature recognition means which detects or estimates the inlet air temperature of the evaporator, a control means that is a dew-point temperature estimation means which estimates the dew-point temperature using the inlet air temperature and the control temperature, constituting a time estimation means which, based on the difference between the above-mentioned dew-point temperature and the above-mentioned control temperature and/or the above-mentioned blower fan's air blasting capability, estimates the time until the above-mentioned evaporator dries out, and control of the above-mentioned compressor taking into consideration the time estimated by the above-mentioned time estimation means.

Using such type of construction, because the length of time until the evaporator dries out can be estimated using the time estimation means and the compressor is controlled taking into consideration the time estimated by the time estimation means, the emission of bad smells from the evaporator can continue to be suppressed, and the operation of the compressor can be suppressed just prior to the evaporator drying out.

In addition, the above-mentioned construction may be equipped with a conditioned change determination means which determines whether or not the conditions influencing the evaporator's thermal loading have changed and in the event that the above-mentioned conditioned change determination means determines that the conditions influencing the above-mentioned evaporator's thermal loading have changed, the determination made by the above-mentioned temperature determination means and/or the decision concerning the control temperature reached by the above-mentioned control temperature determination means is redone, and based on the redone resultant above-mentioned control temperature, the above-mentioned compressor is controlled.

Using such type of construction, because the control temperature is reset with each variation in the evaporator's thermal loading, even if the thermal loading varies, the suppression of bad smells from the evaporator can be suppressed and the energy used by the compressor can be controlled.

As stated above, by using the invention described in Claims 1 and 3, because the temperature detection means determines the evaporator temperature change after the refrigeration cycle has ceased to operate, it becomes possible to determine the control temperature, there is no need to use a humidity sensor and it becomes possible to suppress the occurrence of bad smells from the evaporator by way of a simple construction.

In addition, by using the invention described in Claim 4, being equipped with an inlet air temperature recognition means which detects or estimates the inlet air temperature of the above-mentioned evaporator the dew-point temperature can be estimated from the inlet air temperature and the control temperature, and based on the difference between the dew-point temperature and the control temperature and/or the blower fan's air blasting capability, an estimate can be made of the time until the evaporator dries out and, because the compressor can be controlled taking into consideration the time estimated, the operation of the compressor can be suppressed until just prior to the point in time that the evaporator dries out, and it becomes possible to both prevent the occurrence of bad smells and the energy used in the operation of the air-conditioner can be controlled.

By using the invention as described in Claim 5, in the event that it is determined that the conditions influencing the above-mentioned evaporator's thermal loading have changed, because the control temperature is newly reset, even if there is a the variation in thermal loading it becomes possible to both prevent the occurrence of bad smells and control the energy used in operation of the air-conditioner.

Figure 1 is a block diagram depicting an air-conditioning system according to the present invention in the form of an air-conditioning system for use in automobiles. In this example the compressor is a fixed capacity type.

Figure 2 depicts an example of the control action carried out by the control unit in Figure 1.

Figure 3 is a diagram showing the temporal response of the evaporator's exit-side temperature after the compressor's ability to discharge has ceased.

Figure 4 is a diagram showing the difference between the dew-point temperature and the control temperature (wet-bulb temperature) and the size of the blast and its relationship to the period of time prior to the evaporator drying out.

Figure 5 is a diagram showing the temporal change in the evaporator exit-side temperature in the event where a fixed capacity type compressor is switched on and off using the control temperature as the threshold temperature at which the compressor is activated.

Figure 6 is a block diagram depicting an air-conditioning system in as per the present invention in the form of an air-conditioning system for use in automobiles. In this example the compressor is a variable capacity type.

Figure 7 depicts an example of the control action carried out by the control unit in Figure 6.

Figure 8 is a diagram showing the temporal change in the evaporator exit-side temperature in the event where the exit-side temperature is controlled using the control temperature that has caused the discharge volume of the variable capacity type compressor to vary.

Hereinafter, explanations of the best configuration of the present invention will be made with reference to the attached drawings.

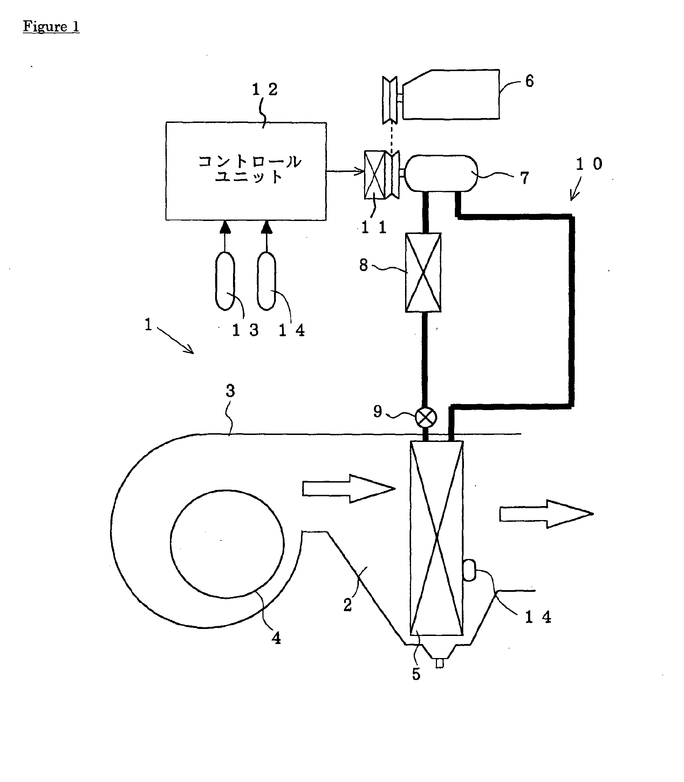

Figure 1 shows a simple block diagram of an air-conditioning system 1 for use in automobiles. This air-conditioning system 1 for use in automobiles has an intake switch which is equipped with an external air conduction inlet and an internal air conduction inlet which are not shown in the diagram but which are situated on the upper stream side of ventilation case 3 formed with air duct 2, and the amount of air taken from the outside air that is introduced from the external air conduction inlet and the amount of internal air that is introduced from the internal air conduction inlet is regulated by the intake door. On ventilation case 3 there is a blower fan 4 which rotates by way of a motor and which is fitted facing the above-mentioned intake switch, and the air which is introduced when blower fan 4 rotates is pressure fed to evaporator 5 which is situated on the lower stream side.

At the lower stream side of evaporator 5 the air mixture which regulates the heater core (not shown in the diagram) and the ventilation capacity of the heater core is placed, constituting a construction which supplies the air which has been altered in temperature by the evaporator and/or heater core from the air-flow exit fitted at the lowermost stream side of ventilation unit 1 to the casing.

The above-mentioned evaporator 5 constitutes a compressor 7 which rotates by way of energy received from engine 6 and, condenser 8 which condenses the high temperature, high pressure refrigerant compressed by this compressor 7, and an expansion device 9 which decompresses this refrigerant condensed by condenser 8 turning it into a low temperature, low pressure gas-liquid mix refrigerant, which together comprise a construction of attached pipes to form refrigeration cycle 10, and a heat exchange occurs between the low temperature, low pressure gas-liquid mix refrigerant which is transferred from expansion device 9 and the air flowing through air duct 2 and evaporation takes place.

Here, the compressor 7 is a fixed capacity type with no mechanism for varying the discharge rate and the power from engine 6 is transmitted to the drive shaft by way of a electromagnetic clutch 11, and this electromagnetic clutch 11 can be switched on and off by way of a control signal from control unit 12 making it possible to control the on and off switching of compressor 7.

The control unit 12 is equipped with items which in themselves are public knowledge such as a central processing unit (CPU), read-only memory (ROM), random access memory (RAM), input-output port etc, and the signal sent from inlet-side temperature sensor 13 which detects the inlet side air temperature of evaporator 5, and the signals and other information sent from exit-side temperature sensor 14 which detects the exit-side temperature of evaporator 5 as introduced in the exit-side fin cavity etc of evaporator 5 are entered, and consequently each input signal is provided to the pre-determined program that is provided in the memory, and the on and off switching of the electromagnetic clutch 11 of compressor 7 can be controlled.

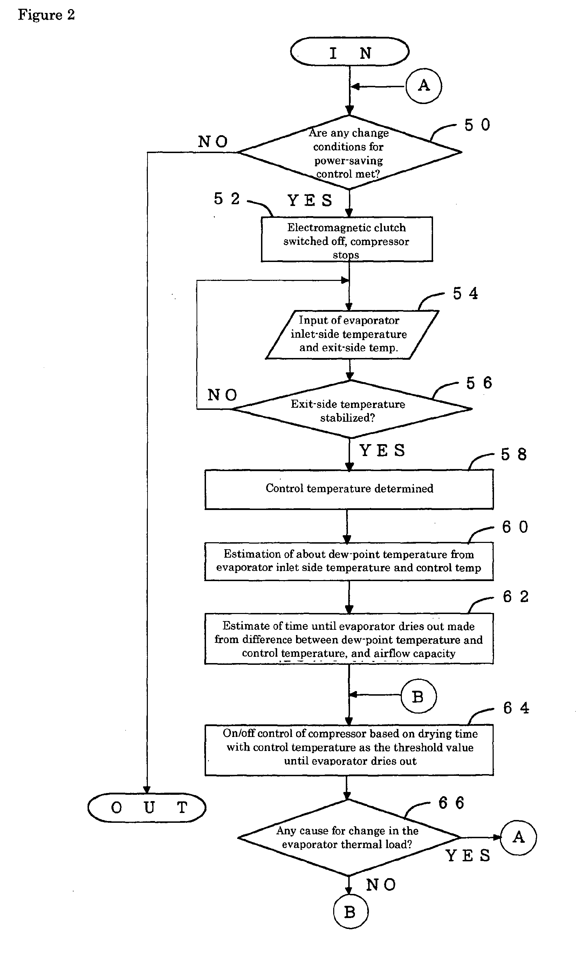

Figure 2 is a flow chart depicting an example of how the air-conditioning system is controlled by control unit 12, and the following explanation shall be based on the control action example as depicted in the flow chart. For the sake of simplicity of the description, in the control action example shown only the process associated with the control of the evaporator temperature is depicted, and other processes have been omitted.

After the air-conditioning system has been activated, control unit 12 carries out a process routine consisting of successive initialising process such as default setting etc, and step 50 consists of equalizing the temperature inside the casing to roughly that of the desired temperature, lowering the blast volume, initialising the control of the air mixture (not shown in diagram) etc, determining whether or not the change conditions are in place for power saving control when the ventilation control has reached a stabilized state.

During transition periods where the blast volume increases in order to facilitate cool-down etc, and the air mixture becomes fully cooled etc, because the change conditions are in place for power saving control, this routine's power saving control is not carried out, and the transition is made to other control routines.

Correspondingly, in step 50, in the event that it has been determined that the change conditions for power saving control are in place, the electromagnetic clutch 11 switches off and compressor 7 stops, and refrigeration cycle 10 ceases to operate (step 52). Then, in this state the signal from the inlet-side temperature sensor 13 and/or the exit-side temperature sensor 14 is entered and each temperature is monitored (step 54).

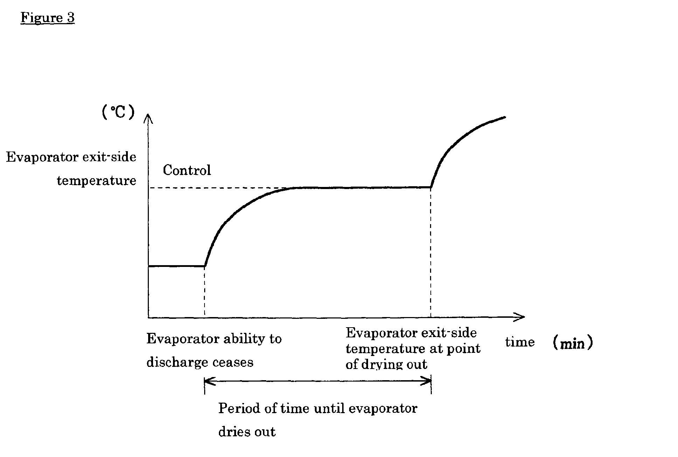

As shown in figure 3, the exit-side temperature of evaporator 5 gradually rises from the point in time that compressor 7 is stopped (the point in time at which the compressor's ability to discharge ceases), and the condensed water that was attached to the fin and other parts of evaporator 5 begins to vaporize and becomes held at a constant temperature. The exit-side temperature is continuously maintained in this state until such time as the condensed water vaporizes, and when the condensed water has totally evaporated evaporator 5 dries out, and the exit-side temperature starts to rise again.

This type of temperature change is monitored by exit-side temperature sensor 14, and in step 56 it is determined whether or not this exit-side temperature is stable, that is to say, whether or not the exit-side temperature existing when the condensed water starts to vaporize has become constant or not.

This stabilized exit-side temperature α corresponds to the wet-bulb temperature of the air on the exit-side of evaporator 5, and the control temperature of evaporator 5 is hereinafter set to this exit-side temperature α (in this example α is used as the setting), and using this as the threshold level for activating the compressor, the compressor 7 is turned on and off.

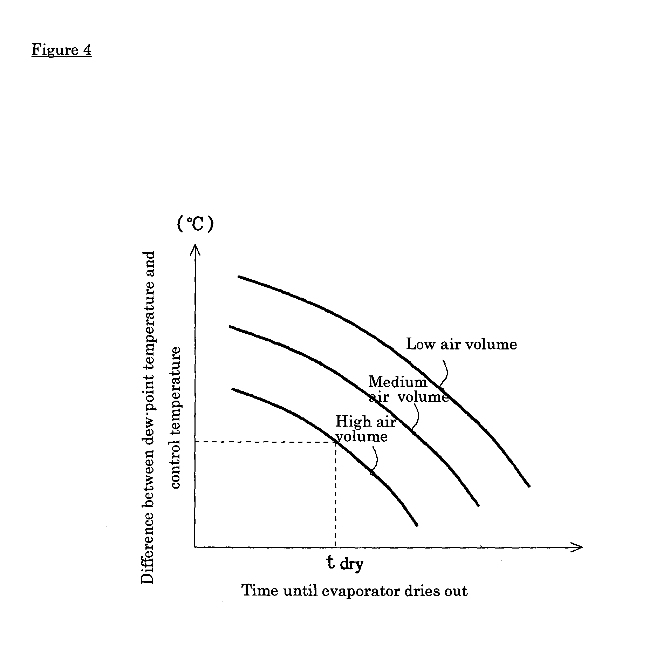

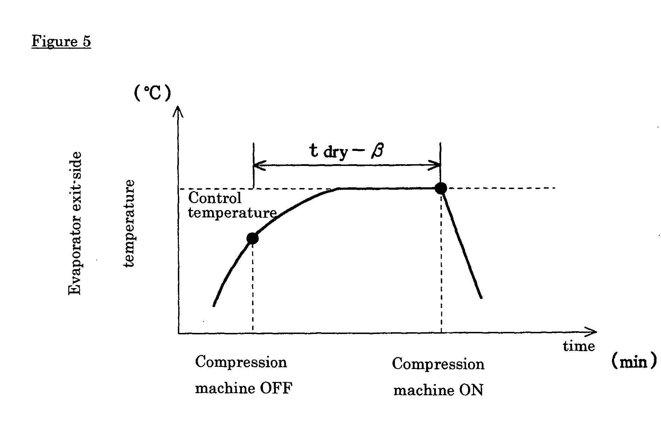

Specifically, based on both the inlet-side temperature of evaporator 5 as detected by inlet-side temperature sensor 13 on evaporator 5 and the control temperature that was determined in step 58, the dew-point temperature is calculated (step 60) and using the calculated difference between the dew-point temperature and the control temperature, or the time until evaporator 5 dries out blast volume from blower fan 4, and an estimate of is made based on previously stored map data shown in the example in figure 4 (step 62). Then, based on an estimated period of time t dry until evaporator 5 dries out, compressor 7 is turned on and off as shown in figure 5 (step 64). In other words, compressor 7 stops at such point in time as certain conditions are in place, and when it stops the exit-side temperature of evaporator 5 becomes constant, and in step 62 the time required until drying out occurs is set (t dry ― β : hereinafter called control time), and after this control time has elapsed the electromagnetic clutch 11 is switched on and compressor 7 is reactivated, and the refrigerant is supplied to evaporator 5 and the temperature is decreased.

Because the thermal loading variable factors of evaporator 5 (for example intake suction mode, blast volume, inlet air temperature etc) vary and the thermal loading of evaporator is repeatedly carried out as long as there is no variation, (step 66), the above-mentioned on/off control function acts to prevent the surface of evaporator 5 from drying out. Correspondingly, in the event where inlet-side thermal loading variable factor of evaporator 5 varies and the evaporator's thermal loading varies, in maintaining the previous control requirement, bad smells occur when the condensed water has evaporated and the power saving function of compressor 7 is sufficiently inconvenienced. For this reason, in step 66 in the event where it is determined that a thermal loading variable factor is present for evaporator 5, there is a return to step 50 where the control temperature and control time are re-set under the new conditions which provide for maintaining control of the power saving function.

Consequently, depending on the above-mentioned control function, before evaporator 5 dries out compressor 7 switches on and the refrigeration cycle is activated, and because the possibility arises of the evaporator surface being maintained in a state of continuous dampness evaporator 5 it becomes possible to decrease the occurrence of bad smells. In addition, because it becomes possible to regulate the time at which the compressor 7 switches off as the time just prior to which evaporator 5 dries out, compressor 7's degree of capacity utilization is able to be reduced to the requisite minimum, and it thus becomes possible to control the power saving of the air-conditioner.

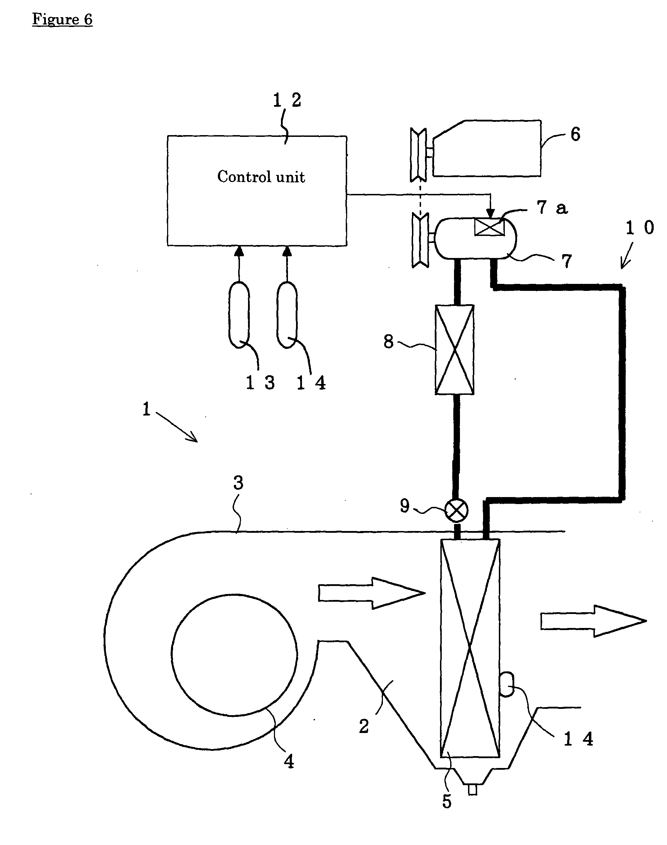

In figure 6, other constructions concerning the present invention are shown. Compressor 7 in this construction has a control valve 7a which controls the crank chamber, in the above-mentioned control unit 12 using the control valve 7a changes can be made to the crank chamber by controlling the control signal supplied, and there are external variable capacity types which control the discharge rate, causing the belt on engine 6 to be driven. Furthermore, with regard to other constructions, because they are similar to the above-mentioned construction example they shall be treated in the same place and under the same number, and an additional explanation shall be omitted.

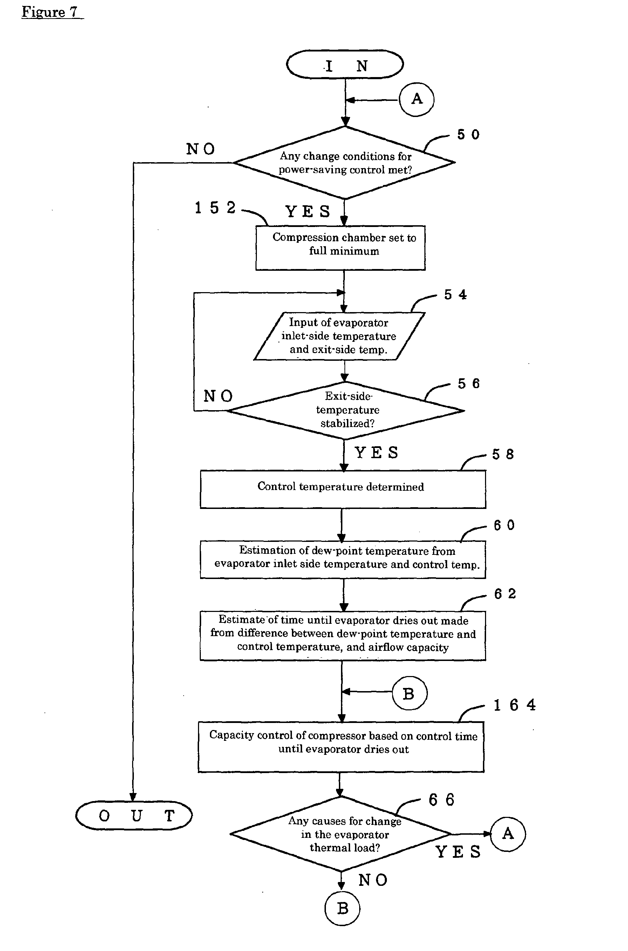

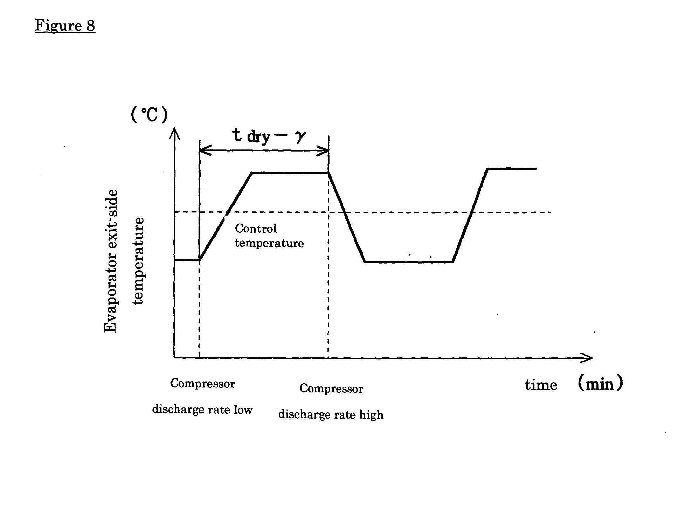

An example of how this sort of construction, which uses a variable capacity type of compressor 7, is controlled by control unit 12 is shown in figure 7. In the event that a variable capacity type of compressor 7 is used, because the compressor is constantly revolving, the above-mentioned step 52 is replaced by step 152, and the piston stroke of compressor 7 is set to full [destroke] and the refrigeration cycle 10 is deactivated. In addition, step 64 is replaced by step 64, and based on the control temperature determined in step 58 (for example a temperature lower than α), and in order to allow the evaporator temperature to fluctuate, the compressor discharge volume is varied. That is to say, as illustrated in figure 8, as far as the control temperature is concerned, in order to allow the exit-side temperature of evaporator 5 to fluctuate, the discharge volume of compressor 7 is varied and when the exit-side temperature of evaporator 5 rises, specifically, the discharge volume of compressor 7 decreases at the point in time when certain conditions are met, and this time when the discharge volume decreases is set to a time that is lower than when the evaporator will dry out in accordance with the estimate made in step 62 (t dry ― γ: hereinafter "control time"), and after this control time has elapsed the discharge volume of compressor 7 increases and the amount of refrigerant being supplied to evaporator 5 is augmented and the temperature of evaporator 5 decreases.

Consequently, using this type of control function, prior to evaporator 5 drying out the discharge volume of compressor 7 increases and the amount of refrigerant being supplied to evaporator 5 is augmented, and because it becomes possible to maintain evaporator 5 in a constant state of dampness, it also becomes possible to suppress the occurrence of smells from evaporator 5. In addition, because it becomes possible to regulate the time at which there is a decrease in the discharge volume of compressor 7 as the time just prior to which evaporator 5 dries out, it becomes possible to suppress the excess discharge rate of compressor 7 and it thus becomes possible to plan power saving of compressor 7.

Furthermore, in the above-mentioned construction the inlet-side temperature sensor 13 was used to detect the inlet-side temperature of evaporator 7, but an estimate could also be made using room temperature or outdoor air temperature. Moreover, both constructions simply require the control temperature to be lower than α, and the control time too may be adjusted taking other factors into account.

## Claims

1. An air-conditioning system **characterized by** having:
a ventilation case formed with air ducts, and
a blower fan regulating the quantity of air channelled from said ventilation case to a ventilated space, and
a compressor which compresses a refrigerant, or a refrigeration cycle having an evaporator cooling air confined and passing through said ventilation case, and
a temperature detection means to detect the temperature of said evaporator, and
a temperature determination means to determine whether or not the temperature of said evaporator is stable when the operation of said refrigeration cycle is stopped and
a control temperature determination means wherein, once said temperature determination means has determined the temperature of said evaporator to be stabilized, any temperature below that of the stabilized temperature can be recognized as a control temperature, and
a control means controlling said compressor based on said control temperature.

2. An air-conditioning system as claimed in Claim 1 wherein said compressor is a fixed capacity type, and said control means controls the on and off [operation] of said compressor is using said control temperature as the threshold level for activating said compressor.

3. An air-conditioning system as claimed in Claim 1 wherein said compressor is a variable capacity type, and said control means causes the discharge volume of said compressor to vary such that the temperature of said evaporator to fluctuates based on said control temperature, to fluctuate.

4. An air-conditioning system as claimed in Claim 1 where in said air conditioning system is equipped with an inlet air temperature recognition means for detecting or estimating the inlet temperature for said evaporator,
said control means is a dew-point temperature estimation means for estimating the dew-point temperature using said inlet air temperature and said control temperature, and has a constitution having a time estimation means for estimating the time until said evaporator dries out based on the difference between said dew-point temperature and said control temperature and the capacity of said blower fan, controlling said compressor taking into consideration the time estimated by the above-mentioned time estimation means.

5. An air-conditioning system as claimed in Claims 1 or 4 where in said air conditioning system is equipped with a conditions change determination means for determining whether or not conditions influencing the thermal loading of said evaporator have changed, and in the event said conditions change determination means determines the conditions influencing said evaporator thermal loading to have changed, the determination made by said temperature determination means and the determination of control temperature made by said control temperature determination means are redone, and said compressor is controlled based on the redone, resultant said control temperature.
